# EUROPEAN PATENT APPLICATION

(11) **EP 4 644 071 A1**
(43) Date of publication of application: **05.11.2025**
(21) Application number: 24173323.7
(22) Date of filing: 30.04.2024
(51) Int. Cl.: B26B 19/38, A61C 17/22

(54) **USER CLASSIFICATION SYSTEM**

(71) Applicant: Koninklijke Philips N.V., 5656 AG Eindhoven (NL)
(72) Inventor: STEFAN, André Christian, Eindhoven (NL); DIRKSZ, Daniel Alonzo, Eindhoven (NL); SOLERIO, Daniele, 5656AG Eindhoven (NL)
(74) Representative: Philips Intellectual Property & Standards

(57) **Abstract**

The disclosed technology pertains to a categorisation system for a personal care device, such as a power toothbrush, that includes a vibratory component driven by an actuator. The system comprises a data acquisition module that obtains stroke data of the vibratory component during operation, and a data analysis module that determines a use category of the device based on the stroke data.

## Description

### FIELD OF THE INVENTION

The present invention pertains to the field of personal care devices, and more particularly to systems and methods for the classification of the use of personal care devices.

### BACKGROUND

Modern personal care devices are often motorised and comprise one or more components that are driven to move during the operation of the device. For example, electric toothbrushes may contain motor-driven vibrating brush heads, and electric shavers may contain rotary driven razor blades. The operation of these motorised personal care devices may vary significantly between different devices and different users. For example, many personal care devices are designed to be held against a portion of the user's body whilst a personal care treatment is carried out. Different users may apply the device to their body with different pressures which may affect the efficiency of the treatment they receive. Such variation may lead to some users being able to achieve a higher level of treatment form the personal care device than others.

Power toothbrushes (PTBs) are a common type of personal care device that are electrically driven to provide a more effective cleaning experience than manual toothbrushes. These devices typically consist of three main components: a brush-head, a drivetrain, and a handle. The brush-head is the part with the bristles that is put in the mouth to perform the cleaning of the teeth. The drivetrain, or actuating unit, is the "motor" that makes the brush-head move. The handle is the unit that is held in hand and that holds the drivetrain and brush-head together. It typically also contains a battery and electronics to send the driving signal to the drivetrain.

For power toothbrushes and other motorised personal care devices it may be difficult for users to achieve a uniform, high level of treatment from the device.

### SUMMARY OF INVENTION

The invention is defined by the claims.

The present disclosure provides a categorisation system for determining a use category of a personal care device. The personal care device includes an actuator configured to drive vibration of a vibratory component. The categorisation system includes a data acquisition module configured to obtain stroke data of the vibratory component, which describes a stroke value of the vibratory component during operation of the personal care device. The system also includes a data analysis module configured to determine, based on the obtained stroke data of the vibratory component, a use category of the personal care device. This categorisation system may allow for the personalised guidance on the operation of the personal care device to be given to the user based on their use of the personal care device.

The proposed concept of the disclosed invention revolves around a categorisation system for personal care devices. The system is designed to classify the use of a personal care device based on information about its operation. Crucially this information includes stroke data describing the stroke value of a vibratory component of the device.

Many personal care devices comprise actuator mechanisms which utilise at least one motor to drive vibration of a particular vibratory component. This vibratory component may relate to a treatment component for example. The vibration of the vibratory component may facilitate the provision of a personal care treatment to the user of the personal care device. The primary example of this may be a powered toothbrush in which vibration of a brush head element leads to improved cleaning of a user's teeth as the toothbrush is passed along the user's oral surfaces.

Several factors may impact the treatment a user receives during operation of a personal care device. For example, the frequency at which the vibratory component is driven, the amplitude of the driven vibration, and any pressure applied to the vibratory component may all impact the effectiveness of the treatment the user receives. These factors may all be controlled by how the user operates the personal care device. Further, the mechanism of the actuator and the vibratory component may be gradually worn down with repeated use and result in a decline in the operation of the device over time. The rate of this decline may also be highly dependent on how the user operates the personal care device. It may therefore be useful to analyse and describe the use of the device to determine the level of treatment the user is experiencing in their use of the device and how this may be optimised. It was realised by the inventors that the stroke of the vibratory component (i.e. the peak-to-peak angular displacement of the vibratory component as it is driven to vibrate) is a good indicator of the condition of the personal care device and how it is being operated by a user and therefore may be used to categorise the use of the device.

Use categorisation may be beneficial as the determined use category may be used to provide the user of the personal device with personalised feedback. This may allow the user to adjust their operation habits to achieve a better personal care treatment from the personal care device. In addition, the determined use category may be provided to a health care professional. This may provide the health care professional with greater insights into a user's habits and therefore aid the health care professional in providing guidance and/or further treatment to the user.

In some embodiments, the stroke data of the vibratory component comprises a plurality of stroke values, each describing the stroke value of the vibratory component for a respective time period. A distribution of the plurality of stroke values may then be determined. The use category of the personal care device is determined by calculating a statistical stroke parameter value describing a parameter of the determined distribution of the plurality of stroke values of the vibratory component and determining the use category based on the statistical stroke parameter. This statistical analysis provides a more accurate and detailed understanding of the user's operation habits and therefore may lead to a more accurate use categorisation.

In some embodiments the statistical stroke parameter value comprises at least one of: a percentile value of the distribution of the plurality of stroke values of the vibratory component; a mean value of the distribution of the plurality of stroke values of the vibratory component; a median value of the distribution of the plurality of stroke values of the vibratory component; a standard deviation of the distribution of the plurality of stroke values of the vibratory component; a minimum value of the distribution of the plurality of stroke values of the vibratory component; a maximum value of the distribution of the plurality of stroke values of the vibratory component; a range of the distribution of the plurality of stroke values of the vibratory component; and a spectral analysis parameter value of the distribution of the plurality of stroke values of the vibratory component. Various statistical parameters may be useful in summarising the stroke data and thereby allowing efficient categorisation of the use of the device based on the stroke data.

In other embodiments, the data acquisition module is further configured to obtain motor stroke data, which describes a stroke value of a motor of the actuator during operation of the personal care device. The data analysis module is further configured to determine the use category of the personal care device based on both the stroke data of the vibratory component and the motor stroke data. This additional data provides a more comprehensive view of a user's operating habits of the personal care device. In particular, for personal care devices comprising double-resonant actuators, the stroke of the motor may be particularly important in establishing the load applied to the vibratory component during use of the device.

In some embodiments, the motor stroke data may comprise a plurality of stroke values of the motor, each stroke value describing the stroke value of a motor of the actuator for a respective time period. The use category of the personal care device is determined by calculating a statistical stroke parameter value describing a parameter of the determined distribution of the plurality of stroke values of the motor. Statistical analysis may again provide a more accurate and detailed understanding of the user's operation habits and therefore may lead to a more accurate use categorisation.

In some embodiments, the statistical motor parameter value may comprise at least one of: a percentile value of the distribution of the plurality of stroke values of the motor; a mean value of the distribution of the plurality of stroke values of the motor; a median value of the distribution of the plurality of stroke values of the motor; a standard deviation of the distribution of the plurality of stroke values of the motor; a minimum value of the distribution of the plurality of stroke values of the motor; a maximum value of the distribution of the plurality of stroke values of the motor; a range of the distribution of the plurality of stroke values of the motor; and a spectral analysis value of the distribution of the plurality of stroke values of the motor. Thus, the statistical motor parameter used may be selected from a range of different parameters of the distribution of the motor stroke values to achieve the most accurate categorisation of the use of the personal care device.

In yet other embodiments, the data acquisition module is further configured to obtain force data of the personal care device, which describes a force applied to the vibratory component during operation of the personal care device. The data analysis module is further configured to determine the use category of the personal care device based on the force data and the stroke data of the vibratory component. In the context of power toothbrushes, this force data provides additional information about the user's brushing habits, such as whether they tend to brush too hard or too softly. The use of force data may therefore improve the accuracy of the category determination.

In some embodiments, the force data may comprise a plurality of force values of the personal care device, each force value describing the force applied to the vibratory component for a respective time period. A distribution of the plurality of force values is then determined based on the force data. The use category of the personal care device is then determined by calculating a statistical force parameter value describing a parameter of the determined distribution of the plurality of force values and determining the use category based on the statistical force parameter value. Statistical analysis of the force may provide a more accurate and detailed understanding of the strain being placed on the device during use and therefore may lead to a more accurate use categorisation.

In some embodiments, the statistical force parameter value may comprise at least one of: a percentile value of the distribution of the plurality of force values; a mean value of the distribution of the plurality of force values; a median value of the distribution of the plurality of force values; a standard deviation of the distribution of the plurality of force values; a minimum value of the distribution of the plurality of force values; a maximum value of the distribution of the plurality of force values; a range of the distribution of the plurality of force values; and a spectral analysis parameter value of the distribution of the plurality of force values. Different statistical force parameters may be used beneficially for different personal care devices to achieve the most accurate categorisation of the operation of the device.

In some embodiments, determining the use category of the personal care device based on the stroke data of the vibratory component may comprise: determining, from the stroke data of the vibratory component, a cumulative measure of the stroke value of the vibratory component over time; and determining the use category of the personal care device based on the cumulative measure of the stroke value of the vibratory component. Cumulative measures of the stroke value may be beneficial as they contain information about how the stroke value develops over time and therefore a use categorisation system based on this measure may prove to be more reliable.

In some embodiments, the cumulative measure of the stroke value of the vibratory component may comprise at least one of: a cumulative sum value; an average stroke value; a maximum stroke value; a minimum stroke value; and a variation in the stroke value. The cumulative measure used may be selected based on the availability of different cumulative data.

In some embodiments, the data analysis module comprises a machine learning algorithm trained to process the stroke data of the vibratory component to determine the use category of the personal care device. This machine learning algorithm allows for more sophisticated and accurate categorisation of users.

The present disclosure also provides a computer-implemented method for determining a use category of a personal care device, which includes obtaining stroke data of the vibratory component of the personal care device and determining, based on the obtained stroke data, a use category of the personal care device.

Finally, the present disclosure provides a personal care device that includes a vibratory component, an actuator configured to drive the vibratory component to vibrate, and the categorisation system as described above. This personal care device allows for the categorisation of users to be performed directly on the device itself, providing a more convenient and user-friendly experience.

These and other aspects of the invention will be apparent from and elucidated with reference to the embodiment(s) described hereinafter.

### BRIEF DESCRIPTION OF FIGURES

For a better understanding of the invention, and to show more clearly how it may be carried into effect, reference will now be made, by way of example only, to the accompanying drawings, in which:
Fig. 1 illustrates a block diagram of a categorisation system for a personal care device, according to a proposed embodiment;
Fig. 2 depicts a schematic view of a power toothbrush according to an aspect of the present invention;
Fig. 3 presents a simplified flow diagram of a method for determining a use category of a personal care device, according to a proposed embodiment;
Fig. 4 depicts a simplified flow diagram of a method for determining a use category of a personal care device according to an another proposed embodiment; and
Fig. 5 provides a schematic diagram of an electric shaving device, demonstrating the integration of the categorisation system within a personal care device, according to a proposed embodiment of the present invention.

### DETAILED DESCRIPTION

The invention will be described with reference to the Figures.

It should be understood that the Figures are merely schematic and are not drawn to scale. It should also be understood that the same reference numerals are used throughout the Figures to indicate the same or similar parts.

It should also be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

The present disclosure pertains to a categorisation system for motorised personal care devices. Specifically, the system is suitable for personal care devices that comprise an actuator configured to drive a vibratory component of the personal care device to vibrate during the operation of the personal care device. The system is designed to determine a use category of the device based on the stroke data of the vibratory component of the device. This categorisation system may include a data acquisition module and a data analysis module. The data acquisition module may be configured to obtain stroke data of a vibratory component of a personal care device, which describes a stroke value of the vibratory component as it is driven by a motor during operation of the personal care device. The data analysis module may be further configured to determine a use category of the personal care device based on the obtained stroke data.

In summary, an exemplary embodiment of the proposed categorisation system for personal care devices contains the following modules:
A. Data Acquisition: this module is primarily configured to obtain data describing the stroke value of the vibratory component during the operation of the device. The obtained data may contain information about the stroke value of the vibratory component over one or more use sessions of the personal care device. In certain embodiments, this module may be further configured to obtain data of additional measurements to improve the accuracy of the use categorisation. Key examples include motor stroke data, describing the amplitude of the vibrations of the motor that is used to drive the vibratory component, and force data, describing the force applied to the vibratory component during operation of the device.
B. Data Analysis: the obtained data may be analysed in various ways in order to categorise use of the personal care device. Statistical analysis may be used beneficially in certain embodiments to summarise the data and aid in easy categorisation. Other embodiments may summarise the stroke data using cumulative measures. Certain functions of the data analysis module may be carried out using a machine learning algorithm. For example, calculated statistical measures may be fed to a machine learning algorithm which has been trained on a plurality of similar datasets to determine the optimal measures on which to base a categorisation of the personal care device.

Categorisation of the use of a personal care device may provide several benefits. For instance, it may enable the recognition of different types of users of the personal care device, which may lead to adjustments (either manual or automatic) to the operation of the personal care device to improve its performance. Additionally, the user type information can be shared with health professionals such that they can provide better health care.

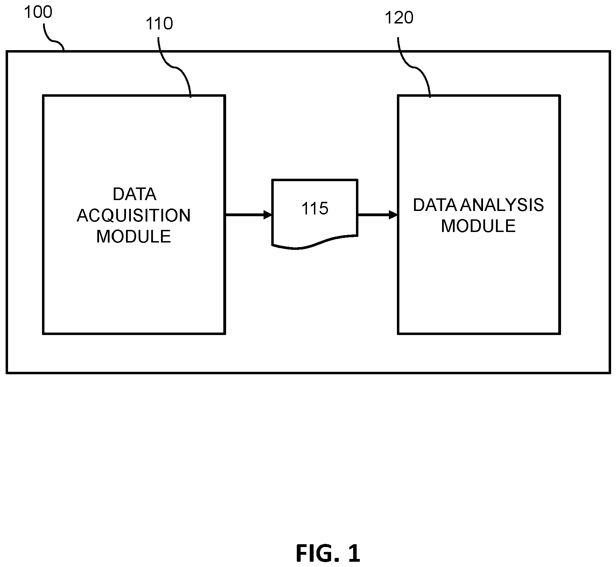

Referring to FIG. 1, a simplified block diagram of a categorisation system 100 is depicted. The categorisation system 100 is suitable for determining a use category of a personal care device and comprises a data acquisition module 110 and a data analysis module 120. The data acquisition module 110 is configured to obtain stroke data 115 of a vibratory component of the personal care device, which is then transmitted to the data analysis module 120. The vibratory component is driven to vibrate during the operation of the personal care device by a motor of an actuator of the personal care device. The data analysis module 120 then processes the stroke data of the vibratory device to determine a use category for the personal care device. In this exemplary embodiment, the determined use category is at least one of: heavy use; average use; and light use. Thus, the system results in the classification of different personal care devices in to three graduated use classes.

In this particular embodiment, the stroke data of the vibratory component comprises a plurality of stroke values of the vibratory component, each of the plurality of stroke values describing the stroke value of the vibratory component for a respective time period. Determining the use category then comprises determining, based on the stroke data of the vibratory component, a distribution of the plurality of stroke values of the vibratory component; calculating a statistical stroke parameter value describing a parameter of the determined distribution of the plurality of stroke values of the vibratory component; and determining the use category based on the statistical stroke parameter value.

In this embodiment, several statistical stroke parameter values of the personal care device are determined, i.e., the system 100 is configured to determine the quartile values of the distribution, the mean, the median, and the maximum and minimum values of the distribution of the plurality of stroke values of the vibratory component. These determined statistical stroke parameter values are then used as inputs to a machine learning algorithm which determines a use category for the personal care device based on the statistical stroke parameter values.

Suitable machine-learning algorithms for being employed in the present invention will be apparent to the skilled person. Examples of suitable machine-learning algorithms include decision tree algorithms and artificial neural networks. Other machine-learning algorithms such as logistic regression, support vector machines or Naive Bayesian models are suitable alternatives.

The structure of an artificial neural network (or, simply, neural network) is inspired by the human brain. Neural networks are comprised of layers, each layer comprising a plurality of neurons. Each neuron comprises a mathematical operation. In particular, each neuron may comprise a different weighted combination of a single type of transformation (e.g., the same type of transformation, sigmoid etc. but with different weightings). In the process of processing input data, the mathematical operation of each neuron is performed on the input data to produce a numerical output, and the outputs of each layer in the neural network are fed into the next layer sequentially. The final layer provides the output.

Methods of training a machine-learning algorithm are well known. Typically, such methods comprise obtaining a training dataset, comprising training input data entries and corresponding training output data entries. An initialized machine-learning algorithm is applied to each input data entry to generate predicted output data entries. An error between the predicted output data entries and corresponding training output data entries is used to modify the machine-learning algorithm. This process can be repeated until the error converges, and the predicted output data entries are sufficiently similar (e.g. ±1%) to the training output data entries. This is commonly known as a supervised learning technique.

For example, weightings of the mathematical operation of each neuron may be modified until the error converges. Known methods of modifying a neural network include gradient descent, backpropagation algorithms and so on.

The training input data entries for the machine learning algorithm of the data analysis module described above correspond to example statistical stroke parameter values for different personal care devices. These may correspond to real stroke data of real personal care devices or simulated stroke data of simulated personal care devices. The training output data entries correspond to the use category for each of the devices. In other words, the machine learning algorithm of the present invention may be trained using a deep learning algorithm configured to receive an array of training inputs and respective known outputs, wherein a training input comprises training statistical stroke parameter values of a personal care device and a respective known output comprises a use category of the personal care device. In other embodiments, the training inputs may correspond to the unprocessed stroke data of the vibratory component obtained by the data acquisition module. In this way, the machine learning model of the present invention may be trained to output a prediction of the use category of a personal care device when provided with at least one statistical stroke parameter value or set of stroke data of a vibratory component of a personal care device.

In particular, an algorithm based on SVM (Support Vector Machine) may be used. This is a supervised learning method and operates by identifying the ideal hyperplane for dividing data into multiple classes. The margin, or distance between the hyperplane and the closest data points (i.e. personal care device) from each category - this may also be referred to as the support vector - is maximised. SVM looks for the hyperplane that minimizes categorisation errors and effectively categorises training data while also having a good generalization to new data. In case the data cannot be separated into categories based on a linear calculation, SVM can use kernel functions to convert data into a higher-dimensional space where a separating hyperplane can be created. This gives SVM robustness and strong generalization capabilities, making it a flexible and effective tool for this type of application.

Thus, this embodiment of the present invention leverages statistical analysis and a machine learning model to identify a use category for a personal care device based on stroke data of a vibratory component of the device. This has been shown to result in accurate classification of person care device use. However, other embodiments of the present invention may not utilise these functionalities.

In alternative embodiments, the categorisation of the use of the device based on determined statistical stroke parameter values may not require the use of a machine learning algorithm but may instead employ a traditional logic algorithm. For example, use categorisation may involve comparing the determined statistical stroke parameter values to predetermined thresholds to determine the use category of the device. In such embodiments, only a subset of the statistical stroke parameter values above may be determined and used, being those parameters that have been predetermined to be the most indicative of the use of the personal care device.

Similarly other aspects of the categorisation system 100 may be implemented differently in alternative embodiments. The categorisation of use of the device need not rely on statistical analysis at all but instead the stroke data of the vibratory component may comprise a plurality of time-sequenced stroke values of the vibratory component and the use category of the personal care device may be determined based on trend analysis of the plurality of time-sequenced stroke values.

Alternatively, the statistical analysis may involve the use of spectral analysis. For example, a fast Fourier transform or a discrete Fourier transform may be used to analyse the distribution of the plurality of stroke values. Parameters relating to the composition of the distribution may then be determined that are used in the determination of the use category of the personal care device.

The determined use category need not be one of the three possible use categories listed above. In some embodiments more use categories may be used, for example use of the device may be ranked out often. The use may be categorised in terms of various different characteristics of the use of the personal care device. These characteristics may include at least one of: how much force is applied to the vibratory component of the device during use; how often the personal care device is used; the duration of a typical use session of the device; and how variable the use of the device is between use sessions.

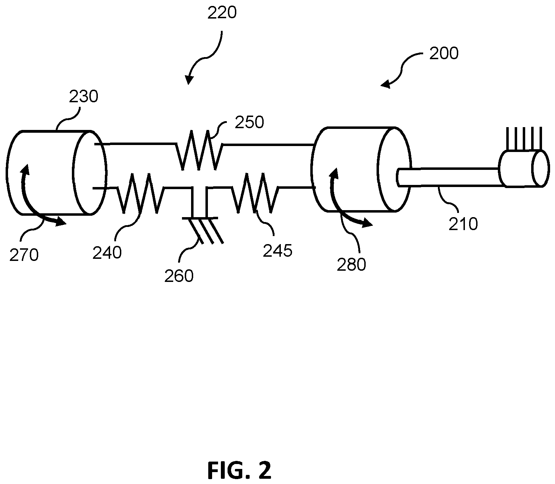

Referring now to FIG. 2, a schematic diagram of a personal care device 200, in this case a power toothbrush, is depicted. The power toothbrush 200 comprises a brush head 210 connected to an actuator (i.e. drive train) 220. In operation, the actuator is configured to drive the brush head 210 to vibrate. In this way the brush head 210 acts as a vibratory component of the personal care device 200.

The drivetrain 220 comprises a motor 230 which generates the required torque for driving the brush head 210. The motor 230 is connected to the brush head 210 via an elastic structure comprising three torsional springs: a rear spring 240, a front spring 245, and a coupling spring 250. The rear spring connects at one end to the motor and at its other end to a positionally fixed frame unit 260. The front spring 245 connects the frame unit 260 to the brush head. The coupling spring directly connects the motor 230 to the brush head 210. The arrangement of these components results in a mechanism designed to allow the brush head 210 to move in response to the motor's actuation, with the spring elements 250, 245, and 240 providing a resilient force that may contribute to the brush head's motion during operation.

The categorisation system 100 may be used to determine a use category of the personal care device 200. The categorisation system may be integrated into the personal care device 100 or may exist in a separate device. For example, the categorisation system 100 may comprise an external processing system. In this latter case the personal care device 200 may be equipped with components known in the art for measuring and transmitting stroke data to the data acquisition unit of the external categorisation system.

The actuator 220 is a common type of actuating mechanism used in personal care devices which is known as a double-resonant actuator. Other types of actuating mechanism may equally well be used in personal care devices. One characteristic feature of the operation of a double-resonant actuator is that it displays inherent load stroke stability when driven at a special frequency. When driving at this frequency, if the load on the actuator increases (i.e., the force applied to the vibratory component/brush head increases) the stroke of the motor (indicated by the arrow 270) increases to compensate for the damping effect produced by the increased load. This results in the stroke value of the brush head (indicated by the arrow 280 in Fig. 2) remaining relatively stable as the load on the actuator varies.

The stroke of the brush head 210 is often much easier to measure than the stroke of the motor 230 and therefore still acts as a very useful tool for determining a use category for a personal care device. However, since the load on the actuator may be a key factor affecting the operation of the personal care device, for devices containing double-resonant actuators due to the load stroke stability at the resonant frequency it may also be beneficial to determine the stroke value of the motor itself or make a direct measurement of the force applied to the vibratory component in order to improve the accuracy of the use categorisation.

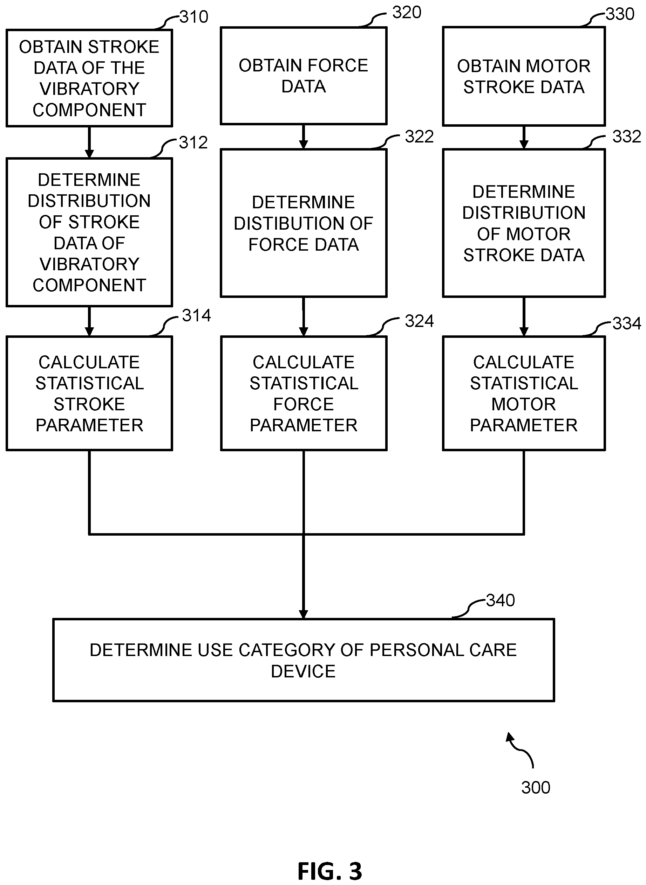

Referring to FIG. 3, a simplified flow diagram of a method 300 for determining a use category of a personal care device is depicted. The method 300 starts with the acquisition of different types of data: stroke data of the vibratory component acquisition 310, force data acquisition 320, and motor stroke data acquisition 330. Each data acquisition step is followed by a corresponding analysis and calculation process: stroke data distribution analysis 312 leads to statistical stroke parameter calculation 314, force data distribution analysis 322 leads to statistical force parameter calculation 324, and motor stroke data distribution analysis 332 leads to statistical motor parameter calculation 334. The culmination of these processes leads to the use category determination 340 of the personal care device, which is based on the analysed and calculated parameters from the stroke values of the vibratory component, force data, and motor stroke data. Since the method 300 uses motor stroke data and force data alongside the stroke data of the vibratory component, it may lead to more accurate and reliable use categorisation.

In detail, in a step 310 stroke data of the vibratory component of a personal care device is obtained, the stroke data of the vibratory component describing the stroke value of the vibratory component during operation of the personal care device. In this embodiment, the stroke data of the vibratory component comprises a plurality of stroke values, each stroke value describing the stroke value of the vibratory component for a respective time period. In a step 312, the distribution of the plurality of stroke values of the vibratory component is determined and in step 314 at least one statistical stroke parameter value is determined, wherein a statistical stroke parameter value describes a parameter of the determined distribution of the plurality of stroke values of the vibratory component. In this example the at least one statistical stroke parameter comprises: the 25th percentile value of the distribution of the plurality of stroke values of the vibratory component; and the mean of this distribution.

Similarly, in a step 320 force data of the personal care device is obtained, the force data describing a force applied to the vibratory component during operation of the personal care device. In this embodiment, the force data of the personal care device comprises a plurality of force values, each of the plurality of the force values describing the force applied to the vibratory component for a respective time period. In a step 322, the distribution of the plurality of force values is determined and in step 324 at least one statistical force parameter value is determined, wherein a statistical force parameter value describes a parameter of the determined distribution of the plurality of force values. In this example the at least one statistical force parameter comprises: the 25th, 50th, and 75th percentile value of the distribution of the plurality of stroke values of the vibratory component; the mean of this distribution, and the absolute minimum force value in the force data.

The method 300 further comprises, in a step 330, obtaining motor stroke data, the motor stroke data describing a stroke value of a motor of the actuator during operation of the personal care device. In this embodiment, the motor stroke data comprises a plurality of stroke values of the motor of the actuator, each of the plurality of the stroke values of the motor describing the stroke value of the motor for a respective time period. In a step 332, the distribution of the plurality of stroke values of the motor is determined and in step 324 at least one statistical motor parameter value is determined, wherein a statistical motor parameter value describes a parameter of the determined distribution of the plurality of stroke values of the motor. In this example the at least one statistical motor parameter comprises: the mean of the distribution of the plurality of motor stroke values.

Once the statistical stoke parameter values, the statistical force parameter values, and the statistical motor parameter values have been determined the method proceeds to a step 340 of determining a use category of the personal care device based on the statistical analysis of the preceding steps. In this embodiment the use category is determined based on: the 25th percentile value of the distribution of the stroke values of the vibratory component; the mean value of the distribution of the plurality of force values; the minimum value of the of the force; the 25th, 50th and 75th percentile force values, and the difference between the mean of the stroke values of the vibratory component and the mean of the stroke values of the motor. This has been shown to result in optimal categorisation of the use of personal care devices comprising an actuator configured to drive vibration of a vibratory component.

The method 300 describes just one example of how different statistical parameter values of the three forms of data may be combined to determine a use category of a personal care device. It is envisioned that other combinations of parameters may be used equally well, and the exact parameters used may depend on the type of device and the type of user (e.g., the user demographic) for example. As discussed with reference to Fig. 1, a machine learning model may be employed to determine the best statistical parameters on which to base the use categorisation. In some embodiments only one of the motor stroke data and the force data may be used depending on the availability of these two forms of data and which data proves to be the most useful for a given personal care device.

In some embodiments, the statistical motor parameter value may comprise at least one of: a percentile value of the distribution of the plurality of stroke values of the motor; a mean value of the distribution of the plurality of stroke values of the motor; a median value of the distribution of the plurality of stroke values of the motor; a standard deviation of the distribution of the plurality of stroke values of the motor; a minimum value of the distribution of the plurality of stroke values of the motor; a maximum value of the distribution of the plurality of stroke values of the motor; a range of the distribution of the plurality of stroke values of the motor; and a spectral analysis parameter value of the distribution of the plurality of stroke values of the motor.

In some embodiments, the statistical force parameter value may comprise at least one of: a percentile value of the distribution of the plurality of force values; a mean value of the distribution of the plurality of force values; a median value of the distribution of the plurality of force values; a standard deviation of the distribution of the plurality of force values; a minimum value of the distribution of the plurality of force values; a maximum value of the distribution of the plurality of force values; a range of the distribution of the plurality of force values; and a spectral analysis parameter value of the distribution of the plurality of force values.

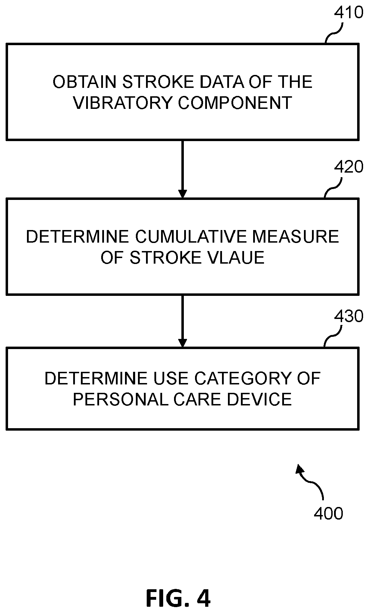

Referring to FIG. 4, a flowchart of a method 400 for determining a use category of a personal care device is depicted. The method 400 may begin with the stroke data acquisition step 410, where stroke data of the vibratory component may be obtained. The stroke data describes a stroke value of the vibratory component during operation of the personal care device.

Following the stroke data acquisition step 410, the method 400 proceeds to the step 420. In this step, a cumulative measure of the stroke value of the vibratory component over time may be determined. In this embodiment, the cumulative measure of the stroke value of the vibratory component comprises at least one of: a cumulative sum value; an average stroke value; a maximum stroke value; a minimum stroke value; and a variation in the stroke value.

The method 400 concludes with the use category determination step 430, where the use category of the personal care device is determined based on the cumulative measure of the stroke value of the vibratory component.

Using a cumulative measure of the stroke value in this way allows for improved information about how the use of the personal care device varies and develops over the lifetime of the device or the lifetime of one or more components of the device. This may result in improved accuracy of device use categorisation. Cumulative measures of the force applied to the vibratory component and/or the stroke of the motor may be similarly used for improved categorisation of the use of a personal care device.

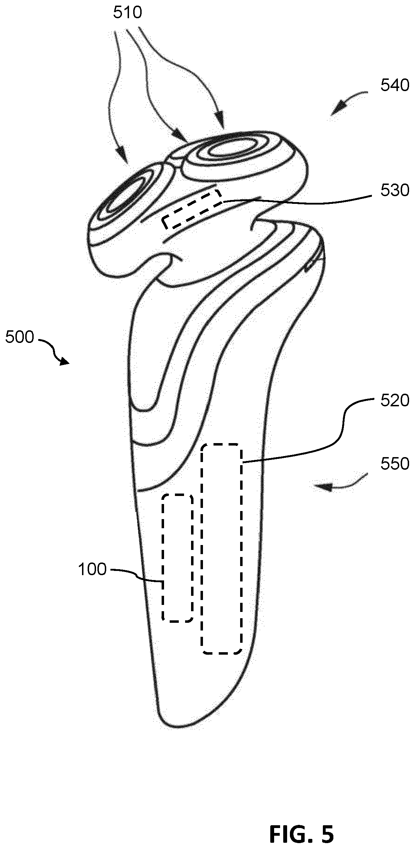

Referring now to FIG. 5, there is depicted a schematic diagram of a personal care device 500 according to a proposed embodiment.

In this exemplary embodiment, the personal care device 500 is an electric shaving device comprising a head component 540 connected to a handle 550 that houses functional components of the personal care device 500.

The electric shaving device 500 further comprises an actuator 520, housed within the handle 550, which is configured to drive vibratory shaving elements 510 of the head component 540 to vibrate during operation of the personal care device 500. The head component 540 further comprises a force sensor 530 configured to measure the force with which a user presses the shaving elements 510 against their skin during use of the device 500. The handle 550 may also comprise a power unit (not shown) to provide power to the actuator 520.

Crucially, the electric shaving device 500 further comprises the categorisation system 100 comprising the data acquisition module 110 and the data analysis module 120. As discussed with reference to Fig. 1, the data acquisition module of the categorisation system 100 is configured to obtain stroke data of the vibratory shaving elements 510 describing a stroke value of the vibratory component during operation of the personal care device 500. The data analysis module of the categorisation system 100 is then configured to determine, based on the obtained stroke data of the vibratory component, a use category of the personal care device.

In this exemplary embodiment, the data acquisition module of the categorisation system 100 is further configured to obtain force data from the force sensor 430, the force data describing the force applied to the vibratory shaving elements 510 during operation of the personal care device 500. Determining the use category of the personal care device 500 further comprises, determining the use category based on the stroke data of the vibratory shaving elements and the force data of the personal care device.

Although discussed in the context of an electric shaver it will be understood that the categorisation system of the proposed invention may be integrated into a wide variety of personal care devices that comprise vibratory components driven by an actuator. For example, the personal care device may comprise at least one of: an oral care device; a skin treatment device; and a hair removal device. The categorisation system 100 may be adapted to suit the specific requirements of these different types of personal care devices. For instance, the categorisation system 100 may be configured to analyse different forms of stoke and force data, use different algorithms for user classification, or provide different types of feedback depending on whether the personal care device is an oral care device, a skin treatment device, or a hair removal device.

The proposed method(s) and/or systems may be implemented in hardware or software, or a mixture of both (for example, as firmware running on a hardware device). To the extent that an embodiment is implemented partly or wholly in software, the functional steps illustrated in the simplified flow diagrams may be performed by suitably programmed physical computing devices, such as one or more central processing units (CPUs) or graphics processing units (GPUs). Each process - and its individual component steps as illustrated in the flow diagrams - may be performed by the same or different computing devices. According to embodiments, a computer-readable storage medium stores a computer program comprising computer program code configured to cause one or more physical computing devices to carry out a control method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, some of the blocks shown in the block diagrams may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flow diagrams and block diagrams in the Figures illustrate the architecture, functionality, and operation of possible implementations of systems, methods, and computer program products according to various embodiments of the present invention. In this regard, each block in the flow diagrams or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flow diagrams and combinations of blocks in the block diagrams and/or flow diagrams, can be implemented by special purpose hardware-based systems that perform the specified functions or acts or carry out combinations of special purpose hardware and computer instructions.

## Claims

1. A categorisation system (100) for determining a use category of a personal care device (200), wherein the personal care device comprises an actuator (250) configured to drive vibration of a vibratory component (210) of the personal care device, the categorisation system comprising:
a data acquisition module (110) configured to obtain stroke data (115) of the vibratory component, the stroke data of the vibratory component describing a stroke value of the vibratory component during operation of the personal care device; and
a data analysis module (120) configured to determine, based on the obtained stroke data of the vibratory component, a use category of the personal care device.

2. The categorisation system of any preceding claim, wherein the stroke data of the vibratory component comprises a plurality of stroke values of the vibratory component, each of the plurality of stroke value describing the stroke value of the vibratory component for a respective time period,
and wherein determining a use category of the personal care device comprises:
determining (312), based on the stroke data of the vibratory component, a distribution of the plurality of stroke values of the vibratory component;
calculating (314) a statistical stroke parameter value describing a parameter of the determined distribution of the plurality of stroke values of the vibratory component; and
determining (340) the use category based on the statistical stroke parameter value.

3. The categorisation system of claim 2, wherein the statistical stroke parameter value comprises at least one of:
a percentile value of the distribution of the plurality of stroke values of the vibratory component;
a mean value of the distribution of the plurality of stroke values of the vibratory component;
a median value of the distribution of the plurality of stroke values of the vibratory component;
a standard deviation of the distribution of the plurality of stroke values of the vibratory component;
a minimum value of the distribution of the plurality of stroke values of the vibratory component;
a maximum value of the distribution of the plurality of stroke values of the vibratory component;
a range of the distribution of the plurality of stroke values of the vibratory component; and
a spectral analysis parameter value of the distribution of the plurality of stroke values of the vibratory component.

4. The categorisation of any preceding claim, wherein the data acquisition module is further configured to obtain (320) motor stroke data, the motor stroke data describing a stroke value of a motor of the actuator during operation of the personal care device, and
wherein the data analysis module is further configured to determine the use category of the personal care device based on the stroke data of the vibratory component and the motor stroke data.

5. The categorisation system of claim 4, wherein the motor stroke data comprises a plurality of stroke values of the motor, each stroke value describing the stroke value of the motor of the actuator for a respective time period,
and wherein determining a use category of the personal care device comprises:
determining (322), based on the motor stroke data, a distribution of the plurality of stroke values of the motor;
calculating (324) a statistical motor parameter value describing a parameter of the determined distribution of the plurality of stroke values of the motor; and
determining the use category based on the statistical motor parameter value.

6. The categorisation system of claim 5, wherein the statistical motor parameter value comprises at least one of:
a percentile value of the distribution of the plurality of stroke values of the motor;
a mean value of the distribution of the plurality of stroke values of the motor;
a median value of the distribution of the plurality of stroke values of the motor;
a standard deviation of the distribution of the plurality of stroke values of the motor;
a minimum value of the distribution of the plurality of stroke values of the motor;
a maximum value of the distribution of the plurality of stroke values of the motor;
a range of the distribution of the plurality of stroke values of the motor; and
a spectral analysis parameter value of the distribution of the plurality of stroke values of the motor.

7. The categorisation system of any preceding claim, wherein the data acquisition module is further configured to obtain (330) force data of the personal care device, the force data describing a force applied to the vibratory component during operation of the personal care device, and
wherein the data analysis module is further configured to determine the use category of the personal care device based on the force data and the stroke data of the vibratory component.

8. The categorisation system of claim 7, wherein the force data comprises a plurality of force values of the personal care device, each force value describing the force applied to the vibratory component for a respective time period,
and wherein determining the use category of the personal care device comprises:
determining (332), based on the force data, a distribution of the plurality of force values;
calculating (334) a statistical force parameter value describing a parameter of the determined distribution of the plurality of force values; and
determining, based on the statistical force parameter value, the use category of the personal care device.

9. The categorisation system of claim 8, wherein a statistical force parameter value comprises at least one of:
a percentile value of the distribution of the plurality of force values;
a mean value of the distribution of the plurality of force values;
a median value of the distribution of the plurality of force values;
a standard deviation of the distribution of the plurality of force values;
a minimum value of the distribution of the plurality of force values;
a maximum value of the distribution of the plurality of force values;
a range of the distribution of the plurality of force values; and
a spectral analysis parameter value of the distribution of the plurality of force values.

10. The categorisation system of any preceding claim, wherein determining the use category of the personal care device based on the stroke data of the vibratory component comprises:
determining (420), from the stroke data of the vibratory component, a cumulative measure of the stroke value of the vibratory component over time; and
determining (430) the use category of the personal care device based on the cumulative stoke value of the stroke value of the vibratory component.

11. The categorisation system of claim 10, wherein the cumulative measure of the stroke value of the vibratory component comprises at least one of:
a cumulative sum value;
an average stroke value;
a maximum stroke value;
a minimum stroke value; and
a variation in the stoke value.

12. The categorisation system of any preceding claim, wherein the data analysis module comprises a machine learning algorithm trained to process the stroke data of the vibratory component to determine the use category of the personal care device.

13. A computer-implemented method for determining a use category of a personal care device, wherein the personal care device comprises a double-resonant actuator configured to drive vibration of a vibratory component of the personal care device, the method comprising:
obtaining stroke data of the vibratory component of the personal care device, the stroke data of the vibratory component describing a stroke value of the vibratory component during operation of the personal care device; and
determining, based on the obtained stroke data of the vibratory component, a use category of the personal care device.

14. A computer program comprising code means for implementing the method of claim 13 when said program is run on a processing system.

15. A personal care device (500) comprising:
a vibratory component (510);
an actuator (520) configured to drive the vibratory component to vibrate; and
the categorisation system (100) of any of claims 1-12;
and optionally wherein the personal care device comprises at least one of:
an oral care device;
a skin treatment device; and
a hair removal device.
